# EUROPEAN PATENT SPECIFICATION

(11) **EP 1 169 380 B1**
(45) Date of publication and mention of the grant of the patent: **16.03.2005**
(21) Application number: 00901243.6
(22) Date of filing: 28.01.2000
(51) Int. Cl.: C08K 5/00, C08K 5/053, C08K 5/15, C08K 5/06

(54) **STABILIZATION OF POLYMERS AFTER EXPOSURE TO OXIDATION**
STABILISATION VON POLYMEREN NACH AUSSETZEN VON OXIDATION
STABILISATION DE POLYMERES APRES OXYDATION

(30) Priority: 19.03.1999 US 272843
(43) Date of publication of application: 09.01.2002
(73) Proprietor: OCCIDENTAL CHEMICAL CORPORATION, Dallas, TX 75244-6119 (US)
(72) Inventor: WANG, Qi, Grand Island, NY 14072 (US)
(74) Representative: Frankland, Nigel Howard
(86) International application number: PCT/GB2000/000247
(87) International publication number: WO 2000/056812

(56) References cited:
- EP-A- 0 584 679
- DE-A- 3 621 958

## Description

THIS INVENTION relates to the use of stabilisers to reduce the discoloration of certain polymers after they have been exposed to oxidation.

A number of different polymers, including polyvinyl chloride (PVC), polycarbonates, polyurethane, polyethylene, and polypropylene, are used to make various medical devices and as packaging for food. Sterilization can be accomplished by exposing the devices or packages to gamma radiation. However, the gamma radiation can degrade or yellow the polymer, making it unsuitable or less acceptable for certain applications. Polymers such as polyethylene, polypropylene, and PVC can also degrade and yellow after heating.

According to one aspect of the present invention there is provided a polymer selected from the group consisting of polyvinyl chloride, polycarbonate, polyurethane, polyethylene, polypropylene, polyimide, polyester and polyvinyl acetate containing 0.005 to 10 phr (parts by weight per 100 parts by weight of the polymer) of a stabiliser having the general formula: 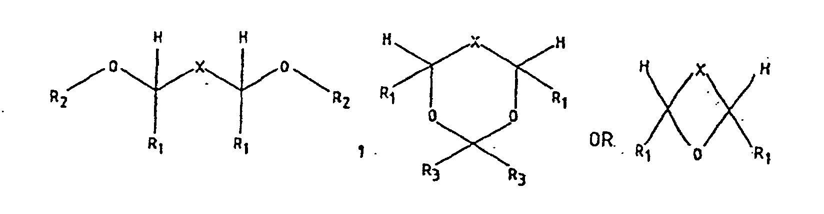 where X is -R₁C=CR₁₋, -C≡C-, or 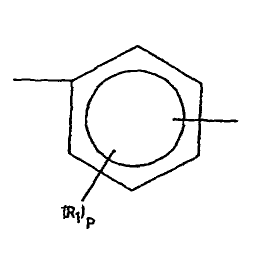 each R₁ is independently selected from R, OR, RCO, ROCO, ROCO₂, P(R)₂, P(OR)₂, PR(OR), N(R)₂, (R)₂NCO, (R)₂NCO₂, SR and halogen, where two R₁ groups can be bridged together to form a ring, with each R being independently selected from hydrogen, alkyl from C₁ to C₂₄, aryl from C₆ to C₂₄ alkaryl from C₇ to C₂₄, and aralkyl from C₇ to C₂₄, each R₂ is independently selected from R, RCO, ROCO, P(OR)₂ Sn(R)_{q}(OR)_{3-q}, SnR_{q}(OCOR)_{3-q}, Si(R)_{q}(OR)_{3-q}, and BR_{q}(OR)_{2-q}, where two R₂ groups can be bridged together to form a ring, each R₃ is independently selected from R, RCO, ROCO, ROCO₂, OR, SR, N(R)₂, OP(R)₂, and OP(OR)₂, p is 0 to 4, depending on the number of available sites, and q is 0 to 3 for the tin stabilisers and 0 to 2 for. the boron stabilisers.

When a particular type of stabiliser is added to certain polymers the polymers degrade and yellow substantially less after exposure to oxidation. Some of the stabilisers of this invention are novel compounds while others are commercially available. Some of these stabilisers are polymeric and resist leaching or migration from the polymer, thereby further extending the lift of the polymer.

Preferably X is -HC=HC-, R₁ is H, R₂ is R₁, R₃ is R₁ and q is O because these compounds work well and are readily available. Stabiliser where each R₁ is hydrogen are especially preferred as they are more effective. When X is -R₁, C=CR₁-, the stabilisers can be either cis or trans, but the cis stabilisers are preferred because they are less expensive.

Preferably the polymer is polyvinylchloride.

Preferably the stabiliser may have the general formula:

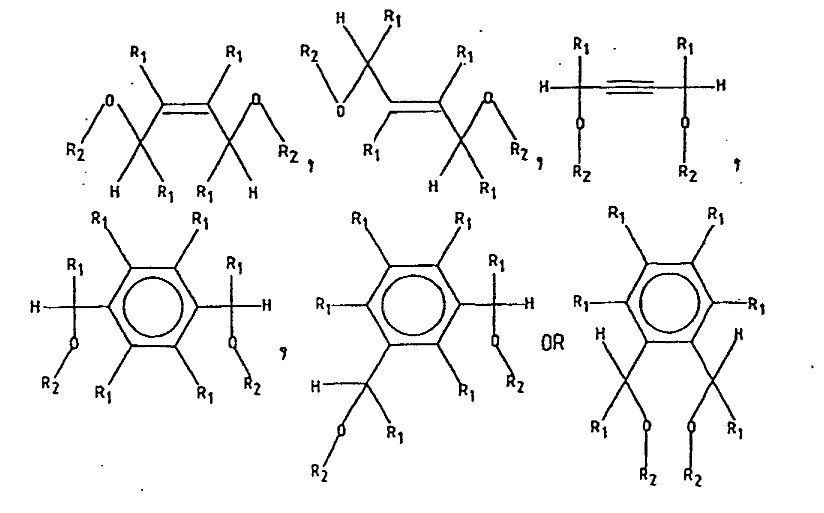

Conveniently the stabiliser may have the general formula:

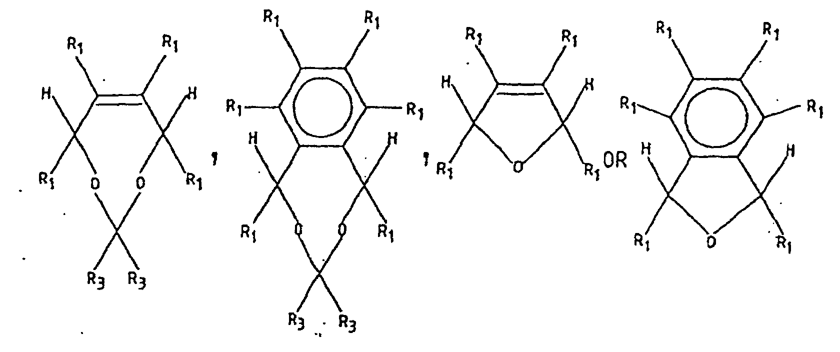

Examples of stabilisers having the above structure include 4,7-dihydro-1,3-dioxepins, ethers and esters of butene-1,4-diol, and phthalans. These stabilizers can be prepared by condensing an allylic diol, or an aromatic analog of an allylic diol, with an aldehyde, ketone, acid, acid halide, ester, alkyl halide, or alcohol or by other reactions known to those skilled in the art, to form derivatives. Preferred stabilizers include cis-2-butene-1,4-diol, cis-4-benzyloxy-2-buten-1-ol, and cis-1,4-dibenzyloxy-2-butene. The stabilizer may be a phthalan. The stabiliser may be 4-7-dihydro-1,3-dioxepin.

The stabilisers of this invention are effective against oxidation of PVC, polycarbonates, polyurethane, polypropylene, polyethylene, polyvinylidene chloride, polyamides, polyimides, polyethers, polyesters, polysiloxanes, polyurethanes, polysulfones, and polysulfides. The preferred polymers are PVC, polycarbonates, polypropylene, and polyethylene because those polymers are more frequently used in medical applications where they are subjected to gamma radiation; particularly preferred is PVC. Thus the invention also relates to a polymer that has been subjected to oxidizing heat or radiation.

The polymer can be stabilized by the addition of about 0.005 to about 10 phr (parts by weight per 100 parts by weight of the polymer) of the stabilizer to the polymer. Less stabilizer is less effective and more stabilizer offers little additional benefit. The preferred amount of stabilizer is about 0.2 to about 6 phr. The stabilizer can be added to a polymer in a variety of ways, such as mixing the reactants at the beginning or during polymerization. The stabilizer is preferably added after at least 70 wt% of the monomer has polymerized. The stabilizer can be added as a solid or with a solvent as a slurry or a solution. Common organic solvents such as N-methylpyrrolidone, diglyme, acetamide, acetone, methanol, ethanol, isopropanol, dimethysulfoxide, and dimethylformamide can be used; water can also be used. Water miscible solvents, such as acetone, tetrahydrofuran, and methanol, are preferred for PVC. It is preferable to add the stabilizer in a solvent as that achieves a more uniform distribution of the stabilizer in the polymer. The stabilizer can also be added during the drying or compounding of the polymer. Various methods can be used for compounding, including milling, dry mixing, and extrusion. The stabilizers function as antioxidants to inhibit various forms of oxidation.

The invention also provides polyvinyl chloride, polyurethane, polyethylene, polypropylene, or polycarbonate containing 0.2 to 6 phr (parts by weight per 100 parts by weight of the polymer) of a stabiliser having the general formula: 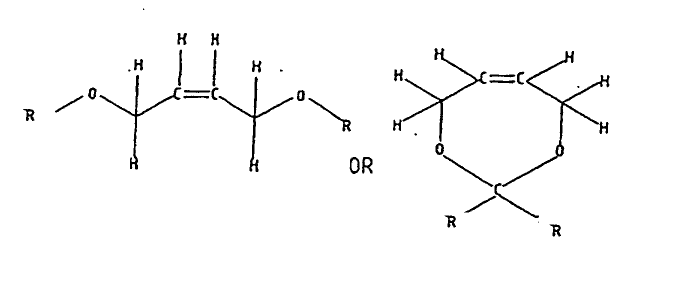 where each R is benzyl.

This polymer may have been subjected to gamma radiation.

The invention additionally provides a method of preventing a polymer selected from the group consisting of polyvinyl chloride, polycarbonate, polyurethane, polyethylene, polypropylene, polyimide, polyester and polyvinyl acetate from discolouring after exposure to oxidation comprising mixing into said polymer 0.005 to 10 phr (parts by weight per 100 parts by weight of the polymer) of a stabiliser having the general formula: 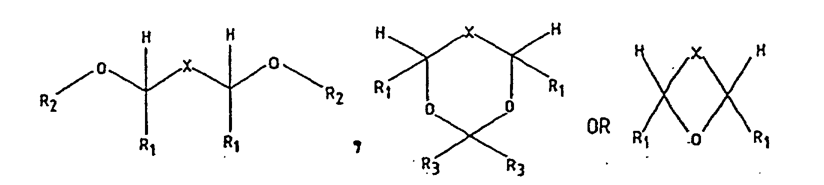 where X is -R₁C=CR₁₋, -C≡C-, or 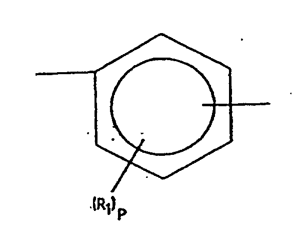 each R₁ is independently selected from R, OR, RCO, ROCO, ROCO₂, P(R)₂, P(OR)₂, PR(OR), N(R)₂, (R)₂NCO, (R)₂NCO₂, SR and halogen, where two R₁ groups can be bridged together to form a ring, with each R being independently selected from hydrogen, alkyl from C₁ to C₂₄ aryl from C₆ to C₂₄ alkaryl from C₇ to C₂₄, and aralkyl from C₇ to C₂₄, each R₂ is independently selected from R, RCO, ROCO, P(OR)₂ Sn(R)_{q}(OR)_{3-q}, SnR_{q}(OCOR)_{3-q}, Si(R)_{q}(OR)_{3-q}, and BR_{q}(OR)_{2-q}, where two R₂ groups can be bridged together to form a ring, each R₃ is independently selected from R, RCO, ROCO, ROCO₂, OR, SR, N(R)₂, OP(R)₂, and OP(OR)₂, p is 0 to 4, depending on the number of available sites, and q is 0 to 3 for the tin stabilisers and 0 to 2 for the boron stabilisers.

The following examples further illustrate the invention.

### EXAMPLES 1 to 13

To a mixture of 150.00 g PVC (sold by Occidental Chemical Corporation as "Oxy 240"), 0.30 g stearic acid (used as a lubricant), 0.23 g of a zinc and calcium mixed salts of mixed fatty acids (used as a heat stabilizer, sold by Witco as "Mark 152 S"), 97.50g dioctyl phthalate (used as a heat stabilizer and to increase flexibility). 15.00 g epoxidized soy bean oil (used as an HCl scavenger to reduce degradation; sold by Witco as "Drapex 6.8"), was added a stabilizer. The mixture was thoroughly blended and hot milled at 149°C (300°F) for 5 minutes. The resulting PVC sheet was cut and pressed into a 4"x3"x1/4" (10x8x0.6 cm) plaque at 165.5°C (330°F). The plaque was divided into two smaller pieces. One was saved for comparison and one was subjected to y radiation at a dose of 50 kGy. The irradiated piece was again divided into two pieces and one of these pieces was oven aged at 50°C for 48 hours. All of the samples were measured for yellowness index with a Macbeth 2020 Plus Color Eye Spectrometer, as described by the Hunter equations (see "The Measurement of Appearance" by Richard S. Hunter, John Wiley & Sons, New York, 1975). The following table gives the stabilizers used and the results.

| Example | Stabilizer | Amount (g) | Yellowness | | |
|---|---|---|---|---|---|
| | | | Initial | After Radiation | After Aging |
| 1 | 2,5-dimethoxy-2,5-dihydrofuran | 0.64 | 17.1 | 47.8 | 69.3 |
| Control | none | | 18.4 | 52.8 | 74.1 |
| 2 | phthalan | 1.34 | 17.5 | 31.9 | 49.5 |
| Control | none | | 18.1 | 50.2 | 75.5 |
| 3 | 2-butene-1,4-diol | 0.75 | 15.7 | 29.7 | 49.4 |
| Control | none | | 16.3 | 43.3 | 66.6 |
| 4 | 2-butene-1,4-diol | 3.20 | 17.1 | 22.2 | 33.1 |
| Control | none | | 16.3 | 43.3 | 66.6 |
| 5 | cis-4-benzyloxy-2-buten-1-ol | 1.67 | 16.6 | 21.1 | 30.7 |
| Control | none | | 16.3 | 43.3 | 66.6 |
| 6 | 1,4-dibenzyloxy-2-butene | 2.23 | 17.6 | 23.9 | 38.2 |
| Control | none | | 16.3 | 43.3 | 66.6 |
| 7 | trans-2,3-dibromo-2-butene-1,4-diol | 2.06 | 31.8 | 37.6 | 61.7 |
| Control | none | | 16.3 | 43.3 | 66.6 |
| 8 | 4,7-dihydro-2-phenyl-1,3-dioxepin | 1.47 | 16.1 | 26.0 | 41.1 |
| Control | none | | 16.3 | 43.3 | 66.6 |
| 9 | 2,2'-(1,4-phenylene)bis(4,7-dihydro-1,3-dioxepin) | 2.40 | 24.3 | 36.5 | 40.9 |
| Control | none | | 18.1 | 50.2 | 75.5 |
| 10 | 1,5-dihydro-3-methoxy-2,4-benzodioxepin | 2.03 | 16.7 | 36.0 | 49.8 |
| Control | none | | 18.1 | 50.2 | 75.5 |
| 11 | 2-butyne-1,4-diol | 0.96 | 18.0 | 39.9 | 62.9 |
| Control | none | | 18.1 | 50.2 | 75.5 |
| 12 | 1,4-bis(2-hydroxyethoxy)-2-butyne | 1.99 | 32.0 | 31.6 | 40.2 |
| Control | none | | 18.1 | 50.2 | 75.5 |
| 13 | 1,4-benzenedimethanol | 1.50 | 21.0 | 41.1 | 47.7 |
| Control | none | | 18.1 | 50.2 | 75.5 |

As can be observed from the above table, after γ radiation the polymers that contained a stabilizer had significantly less discoloration than the control samples.

## Claims

1. A polymer selected from the group consisting of polyvinyl chloride, polycarbonate, polyurethane, polyethylene, polypropylene, polyimide, polyester and polyvinyl acetate containing 0.005 to 10 phr (parts by weight per 100 parts by weight of the polymer) of a stabilizer having the general formula: 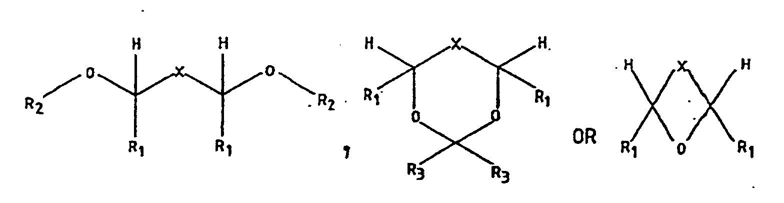 where X is -R₁C=CR₁₋, -C≡C-, or 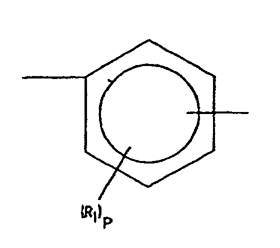 wherein each R₁ is independently selected from R, OR, RCO, ROCO, ROCO₂, P(R)₂, P(OR)₂, PR(OR), N(R)₂, (R)₂NCO, (R)₂NCO₂, SR and halogen, where two R₁ groups can be bridged together to form a ring, with each R being independently selected from hydrogen, alkyl from C₁ to C₂₄, aryl from C₆ to C₂₄ alkaryl from C₇ to C₂₄, and aralkyl from C₇ to C₂₄, each R₂ is independently selected from R, RCO, ROCO, P(OR)₂ Sn(R)_{q}(OR)_{3-q}, SnR_{q}(OCOR)_{3-q}, Si(R)_{q}(OR)_{3-q}, and BR_{q}(OR)_{2-q}, where two R₂ groups can be bridged together to form a ring, each R₃ is independently selected from R, RCO, ROCO, ROCO₂, OR, SR, N(R)₂, OP(R)₂, and OP(OR)₂, p is 0 to 4, depending on the number of available sites, and q is 0 to 3 for the tin stabilizers and 0 to 2 for the boron stabilizers.

2. A polymer according to Claim 1 wherein said polymer is polyvinyl chloride.

3. A polymer according to Claim 1 wherein said stabilizer has the general formula

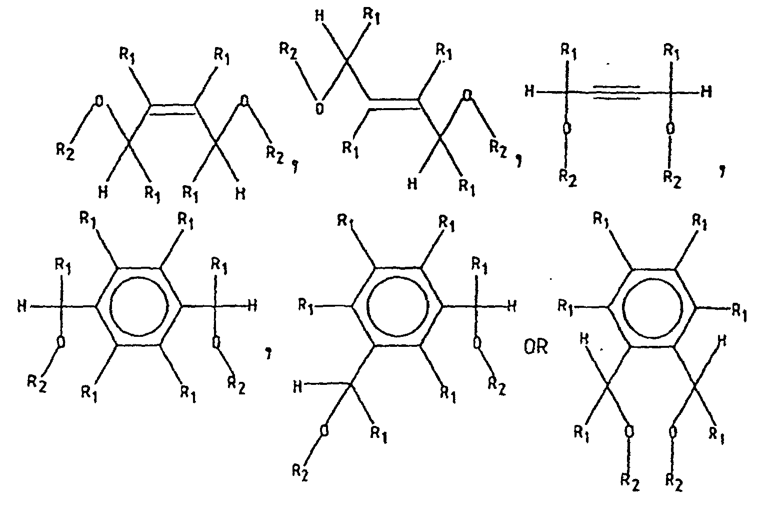

4. A polymer according to Claim 1 wherein said stabilizer has the general formula:

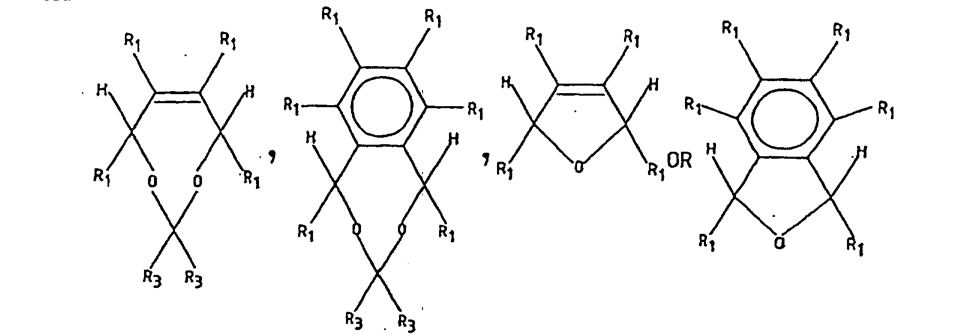

5. A polymer according to Claim 1 wherein said stabilizer is cis-2-butene-1,4-diol.

6. A polymer according to Claim 1 wherein said stabilizer is cis-4-benzyloxy-2-buten-1-ol.

7. A polymer according to Claim 1 wherein said stabilizer is cis-1,4-dibenzyloxy-2-butene.

8. A polymer according to Claim 1 wherein said stabilizer is a 4,7-dihydro-1,3-dioxepin.

9. A polymer according to Claim 1 wherein said stabilizer is a phthalan.

10. A polymer according to any one of the preceding Claims that has been subjected to oxidising heat or radiation.

11. Polyvinyl chloride, polyurethane, polyethylene, polypropylene, or polycarbonate containing 0.2 to 6 phr (parts by weight per 100 parts by weight of the polymer) of a stabilizer having the general formula: 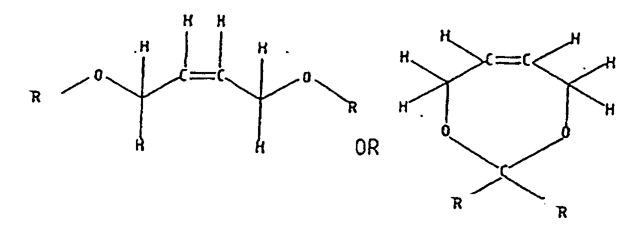 where each R is benzyl.

12. Polyvinyl chloride according to Claim 11 that has been subjected to gamma radiation.

13. A method of preventing a polymer selected from the group consisting of polyvinyl chloride, polycarbonate, polyurethane, polyethylene, polypropylene, polyimide, polyester and polyvinyl acetate from discolouring after exposure to oxidation comprising mixing into said polymer 0.005 to 10 phr (parts by weight per 100 parts by weight of the polymer) of a stabilizer having the general formula: 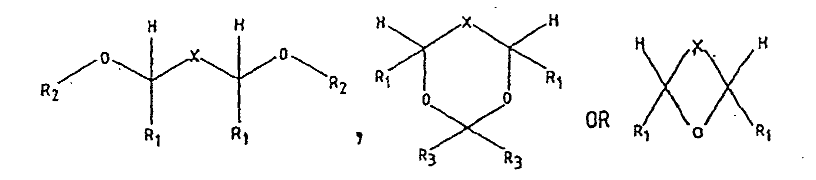 where X is -R₁C=CR₁₋, -C ≡ C-, or 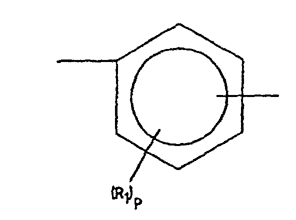 wherein each R₁ is independently selected from R, OR, RCO, ROCO, ROCO₂, P(R)₂, P(OR)₂, PR(OR), N(R)₂, (R)₂NCO, (R)₂NCO₂, SR and halogen, where two R₁ groups can be bridged together to form a ring, with each R being independently selected from hydrogen, alkyl from C₁ to C24, aryl from C₆ to C₂₄ alkaryl from C₇ to C₂₄, and aralkyl from C₇ to C₂₄, each R₂ is independently selected from R, RCO, ROCO, P(OR)₂ SN(R)_{q}(OR)_{3-q}, SNR_{q}(OCOR)_{3-q}, Si(R)_{q}(OR)_{3-q}, and BR_{q}(OR)_{2-q}, where two R₂ groups can be bridged together to form a ring, each R₃ is independently selected from R, RCO, ROCO, ROCO₂, OR, SR, N(R)₂, OP(R)₂, and OP(OR)₂, p is 0 to 4, depending on the number of available sites, and q is 0 to 3 for the tin stabilizers and 0 to 2 for the boron stabilizers.

## Patentansprüche

1. Polymer, ausgewählt aus der Gruppe, bestehend aus Polyvinylchlorid, Polycarbonat, Polyurethan, Polyethylen, Polypropylen, Polyvinylidenchlorid, Polyamid, Polyimid, Polyester und Polyvinylacetat, enthaltend 0,005 bis 10 phr (Gewichtsteile pro 100 Gewichtsteile des Polymers) eines Stabilisators mit der allgemeinen Formel: 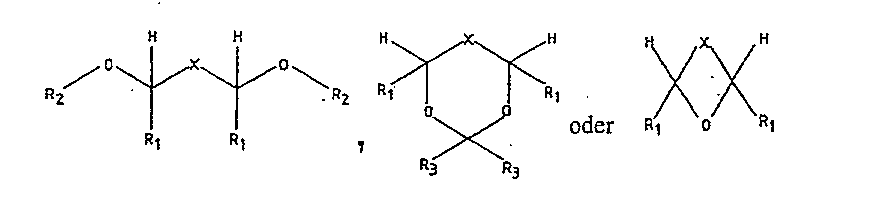 worin X -R₁C=CR₁-, -C≡C- oder 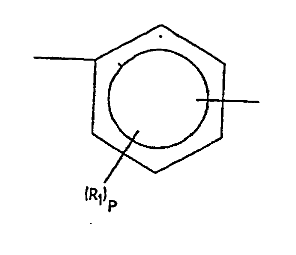 ist, wobei jedes R₁ unabhängig ausgewählt ist aus R, OR, RCO, ROCO, ROCO₂, P(R)₂, P(OR)₂, PR(OR), N(R)₂, (R)₂NCO, (R)₂NCO₂, SR und Halogen, wobei zwei R₁-Gruppen miteinander verbrückt sein können, um einen Ring zu bilden, wobei jedes R unabhängig ausgewählt ist aus Wasserstoff, Alkyl von C₁ bis C₂₄, Aryl von C₆ bis C₂₄, Alkaryl von C₇ bis C₂₄ und Aralkyl von C₇ bis C₂₄, jedes R₂ unabhängig ausgewählt ist aus R, RCO, ROCO, P(OR)₂, Sn(R)_{q}(OR)_{3-q}, SnR_{q}(OCOR)_{3-q}, Si(R)_{q}(OR)_{3-q} und BR_{q}(OR)_{2-q}, wobei zwei R₂-Gruppen miteinander verbrückt sein können, um einen Ring zu bilden, jedes R₃ unabhängig ausgewählt ist aus R, RCO, ROCO, ROCO₂, OR, SR, N(R)₂, OP(R)₂ und OP(OR)₂, p 0 bis 4 ist, in Abhängigkeit von der Anzahl der verfügbaren Stellen, und q 0 bis 3 ist für die Zinn-Stabilisatoren und 0 bis 2 für die Bor-Stabilisatoren.

2. Polymer nach Anspruch 1, **dadurch gekennzeichnet, daß** besagtes Polymer Polyvinylchlorid ist.

3. Polymer nach Anspruch 1, **dadurch gekennzeichnet, daß** besagter Stabilisator die allgemeine Formel hat

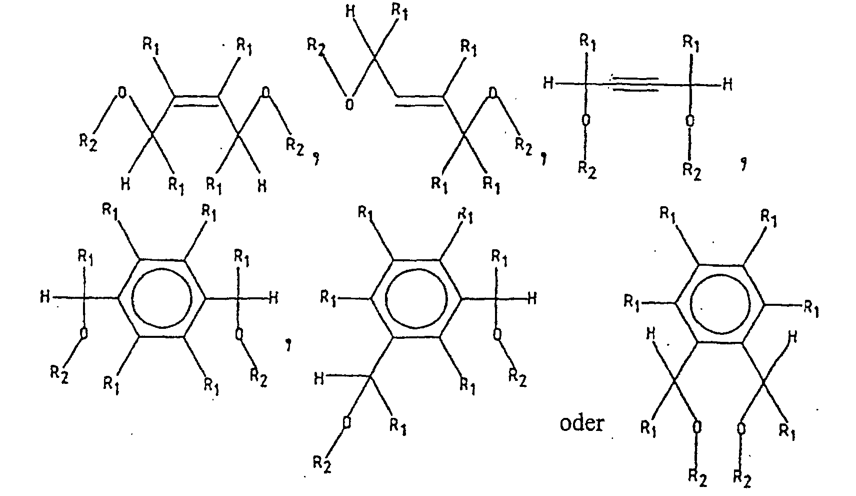

4. Polymer nach Anspruch 1, **dadurch gekennzeichnet, daß** besagter Stabilisator die allgemeine Formel hat:

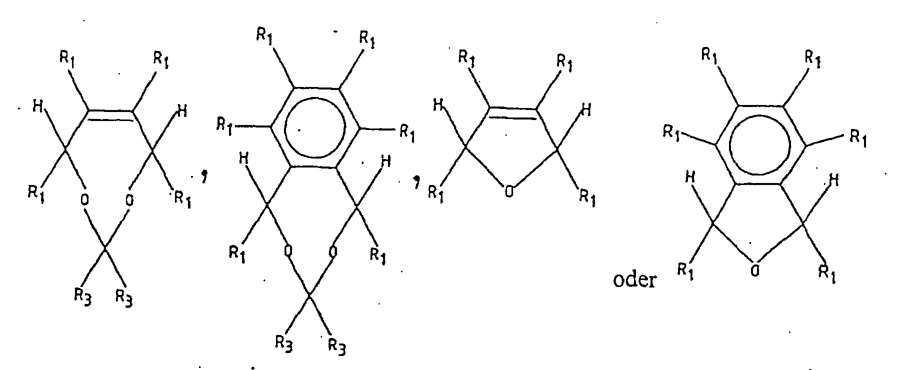

5. Polymer nach Anspruch 1, **dadurch gekennzeichnet, daß** besagter Stabilisator cis-2-Buten-1,4-diol ist.

6. Polymer nach Anspruch 1, **dadurch gekennzeichnet, daß** besagter Stabilisator cis-4-Benzyloxy-2-buten-1-ol ist.

7. Polymer nach Anspruch 1, **dadurch gekennzeichnet, daß** besagter Stabilisator cis-1,4-Dibenzyloxy-2-buten ist.

8. Polymer nach Anspruch 1, **dadurch gekennzeichnet, daß** besagter Stabilisator ein 4,7-Dihydro-1,3-dioxepin ist.

9. Polymer nach Anspruch 1, **dadurch gekennzeichnet, daß** besagter Stabilisator ein Phthalan ist.

10. Polymer nach einem der vorangehenden Ansprüche, **dadurch gekennzeichnet, daß** es oxidierender Hitze oder Strahlung unterworfen worden ist.

11. Polyvinylchlorid, Polyurethan, Polyethylen, Polypropylen oder Polycarbonat, enthaltend 0,2 bis 6 phr (Gewichtsteile pro 100 Gewichtsteile des Polymers) eines Stabilisators mit der allgemeinen Formel: 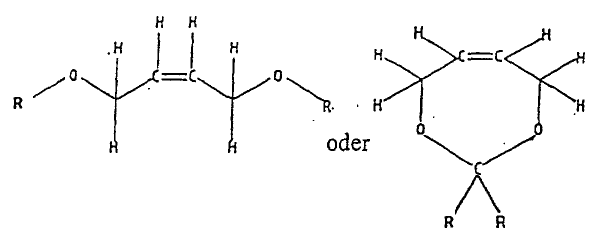 wobei jedes R Benzyl ist.

12. Polyvinylchlorid nach Anspruch 11, das Gammastrahlung ausgesetzt worden ist.

13. Verfahren zur Verhinderung, daß ein Polymer, ausgewählt aus der Gruppe, bestehend aus Polyvinylchlorid, Polycarbonat, Polyurethan, Polyethylen, Polypropylen, Polyvinylidenchlorid, Polyamid, Polyimid, Polyester und Polyvinylacetat, sich verfärbt, nachdem es Oxidation ausgesetzt worden ist, welches umfaßt, daß in besagtes Polymer 0,005 bis 10 phr (Gewichtsteile pro 100 Gewichtsteile des Polymers) eines Stabilisators mit der allgemeinen Formel: 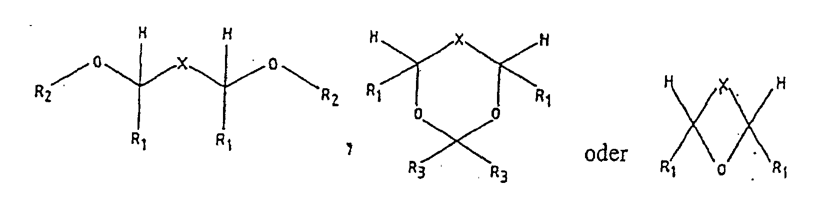 worin X -R₁C=CR₁-, -C≡C- oder 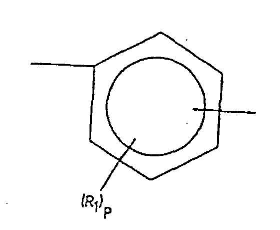 ist, wobei jedes R₁ unabhängig ausgewählt ist aus R, OR, RCO, ROCO, ROCO₂, P(R)₂, P(OR)₂, PR(OR), N(R)₂, (R)₂NCO, (R)₂NCO₂, SR und Halogen, wobei zwei R₁-Gruppen miteinander verbrückt sein können, um einen Ring zu bilden, wobei jedes R unabhängig ausgewählt ist aus Wasserstoff, Alkyl von C₁ bis C₂₄, Aryl von C₆ bis C₂₄, Alkaryl von C₇ bis C₂₄ und Aralkyl von C₇ bis C₂₄, jedes R₂ unabhängig ausgewählt ist aus R, RCO, ROCO, P(OR)₂, Sn(R)_{q}(OR)_{3-q}, SnR_{q}(OCOR)_{3-q}, Si(R)_{q}(OR)_{3-q} und BR_{q}(OR)_{2-q}, wobei zwei R₂-Gruppen miteinander verbrückt sein können, um einen Ring zu bilden, jedes R₃ unabhängig ausgewählt ist aus R, RCO, ROCO, ROCO₂, OR, SR, N(R)₂, OP(R)₂ und OP(OR)₂, p 0 bis 4 ist, in Abhängigkeit von der Anzahl der verfügbaren Stellen, und q 0 bis 3 ist für die Zinn-Stabilisatoren und 0 bis 2 für die Bor-Stabilisatoren, eingemischt werden.

## Revendications

1. Polymère choisi parmi un groupe composé du poly(chlorure de vinyle), du polycarbonate, du polyuréthane, du polyéthylène, du polypropylène, du poly(chlorure de vinylidène), du polyamide, du polyimide, du polyester et du polyacétate de vinyle, et contenant 0,005 à 10 phr (parties en poids pour 100 parties en poids du polymère) d'un stabilisant de formule générale : 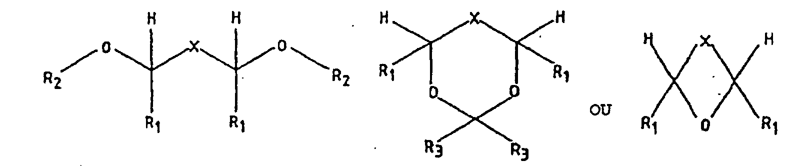 dans laquelle :
• X représente -R₁C=CR₁-, -C≡C-, ou 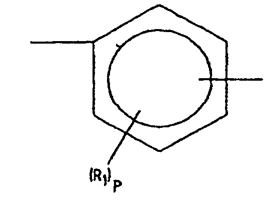
• chaque R₁ représente, de façon indépendante, un groupe R, OR, RCO, ROCO, ROCO₂, P(R)₂, P(OR)₂, PR(OR), N(R)₂, (R)₂NCO, (R)₂NCO₂, SR, ou un halogène ;
• deux groupes R₁ pouvant être pontés ensemble pour former un cycle ;
• chaque R représentant, de façon indépendante, un atome d'hydrogène, un groupe alkyle en C₁ à C₂₄, un groupe aryle en C₆ à C₂₄, un groupe alkaryle en C₇ à C₂₄, ou un groupe aralkyle en C₇ à C₂₄ ;
• chaque R₂ représente, de façon indépendante, un groupe R, RCO, ROCO, P(OR)₂, SnR_{q}(OR)_{3-q}, SnR_{q}(OCOR)_{3-q}, SiR_{q}(OR)_{3-q}, ou BR_{q}(OR)_{2-q} ;
• deux groupes R₂ pouvant être pontés ensemble pour former un cycle ;
• chaque R₃ représente, de façon indépendante, un groupe R, RCO, ROCO, ROCO₂, OR, SR, N(R)₂, OP(R)₂, ou OP(OR)₂ ;
• p est un nombre compris entre 0 et 4 selon le nombre de sites disponibles ;
• et q est un nombre compris entre 0 et 3 pour les stabilisants contenant de l'étain et entre 0 et 2 pour les stabilisants contenant du bore.

2. Polymère selon la revendication 1 dans lequel ledit polymère est le poly(chlorure de vinyle).

3. Polymère selon la revendication 1 dans lequel la formule générale dudit stabilisant est :

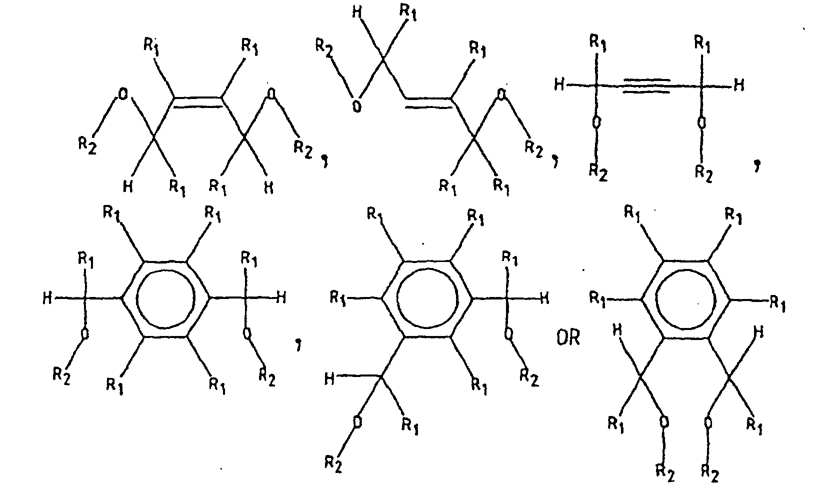

4. Polymère selon la revendication 1 dans lequel la formule générale dudit stabilisant est :

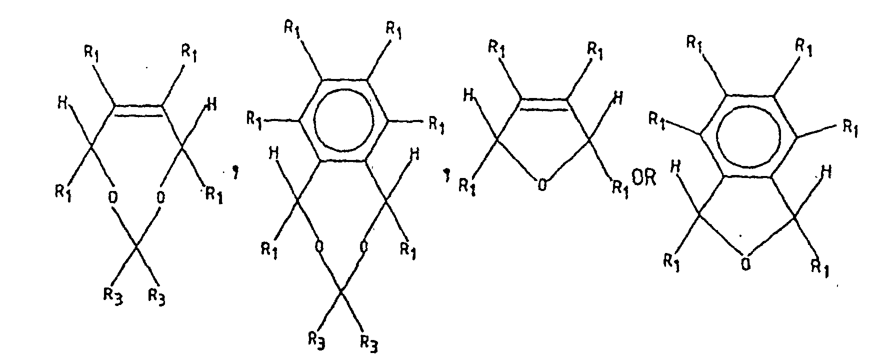

5. Polymère selon la revendication 1 dans lequel ledit stabilisant est le cis-2-butène-1,4-diol.

6. Polymère selon la revendication 1 dans lequel ledit stabilisant est le cis-4-benzyloxy-2-butène-1-ol.

7. Polymère selon la revendication 1 dans lequel ledit stabilisant est le cis-1,4-dibenzyloxy-2-butène.

8. Polymère selon la revendication 1 dans lequel ledit stabilisant est une 4,7-dihydro-1,3-dioxépine.

9. Polymère selon la revendication 1 dans lequel ledit stabilisant est un phtalane.

10. Polymère selon l'une quelconque des revendications précédentes qui a été soumis à une oxydation par la chaleur ou à une irradiation.

11. Poly(chlorure de vinyle), polyuréthane, polyéthylène, polypropylène ou polycarbonate contenant 0,2 à 6 phr (parties en poids pour 100 parties en poids du polymère) d'un stabilisant de formule générale : 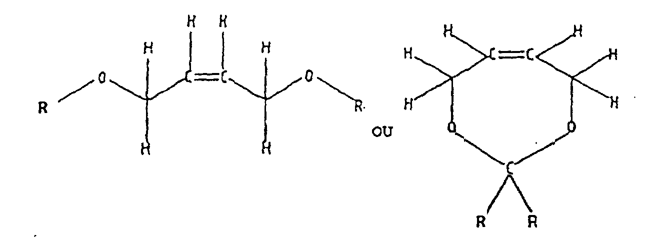 dans laquelle :
• chaque R représente un groupe benzyle.

12. Poly(chlorure de vinyle) selon la revendication 11 qui a été soumis à une irradiation γ.

13. Méthode pour empêcher un polymère, choisi parmi un groupe composé du poly(chlorure de vinyle), du polycarbonate, du polyuréthane, du polyéthylène, du polypropylène, du poly(chlorure de vinylidène), du polyamide, du polyimide, du polyester et du polyacétate de vinyle, de subir une décoloration après exposition à une oxydation, et comprenant le fait de mélanger ledit polymère avec 0,005 à 10 phr (parties en poids pour 100 parties en poids du polymère) d'un stabilisant de formule générale : 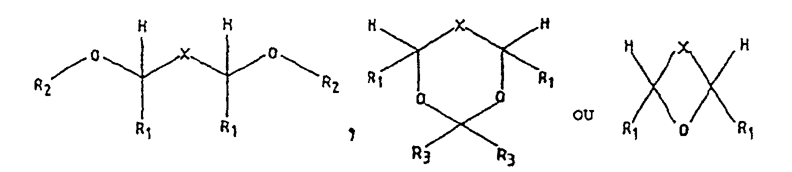 dans laquelle :
• X représente -R₁C=CR₁-, -C≡C-, ou 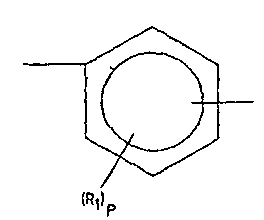
• chaque R₁ représente, de façon indépendante, un groupe R, OR, RCO, ROCO, ROCO₂, P(R)₂, P(OR)₂, PR(OR), N(R)₂, (R)₂NCO, (R)₂NCO₂, SR, ou un halogène ;
• deux groupes R₁ pouvant être pontés ensemble pour former un cycle ;
• chaque R représentant, de façon indépendante, un atome d'hydrogène, un groupe alkyle en C₁ à C₂₄, un groupe aryle en C₆ à C₂₄, un groupe alkaryle en C₇ à C₂₄, ou un groupe aralkyle en C₇ à C₂₄ ;
• chaque R₂ représente, de façon indépendante, un groupe R, RCO, ROCO, P(OR)₂, SnR_{q}(OR)_{3-q}, SnR_{q}(OCOR)_{3-q}, SiR_{q}(OR)_{3-q}, ou BR_{q}(OR)_{2-q} ;
• deux groupes R₂ pouvant être pontés ensemble pour former un cycle ;
• chaque R₃ représente, de façon indépendante, un groupe R, RCO, ROCO, ROCO₂, OR, SR, N(R)₂, OP(R)₂ ou OP(OR)₂ ;
• p est un nombre compris entre 0 et 4 selon le nombre de sites disponibles ;
• et q est un nombre compris entre 0 et 3 pour les stabilisants contenant de l'étain et entre 0 et 2 pour les stabilisants contenant du bore.
